# EUROPÄISCHE PATENTANMELDUNG

(11) **EP 0 596 237 A1**
(43) Veröffentlichungstag der Anmeldung: **11.05.1994**
(21) Anmeldenummer: 93115373.8
(22) Anmeldetag: 23.09.1993
(51) Int. Cl.: B62L 1/14

(54) **Fahrrad-Felgenbremse**

(30) Priorität: 08.10.1992 DE 4233961
(71) Anmelder: Weinmann GmbH & Co. KG Fahrrad- und Motorrad-Teilefabrik, D-78224 Singen (DE)
(72) Erfinder: Germann, Andreas, ch-8280 Kreuzlingen (CH)

(57) **Zusammenfassung**

Bei der erfindungsgemäßen Fahrrad-Felgenbremse ist jeder Schwenkhebel (1) auf einem Bremssockel (7) gelagert, wobei zwischen dem Bremssockel und dem Schwenkhebel zwei Lagerteile (8,9) sowie ein Rückstell-Federelement (13) vorgesehen sind. Eine besonders einfache Konstruktion und zuverlässige Funktion dieser Felgenbremse wird dadurch gewährleistet, daß die beiden Lagerteile durch einen hülsenförmigen Federträger (10) verdrehsicher miteinander verbunden sind, auf dem das als haarnadelförmiger Federkörper ausgebildete Federelelement verdrehsicher und zentriert angeordnet ist, wobei in die Haarnadelöffnung des Federkörpers ein innerer Mitnehmernocken (16) des Schwenkhebels eingreift.

## Beschreibung

Die Erfindung betrifft eine Fahrrad-Felgenbremse, entsprechend dem Oberbegriff des Anspruches 1.

Von praktisch ausgeführten Centilever-Felgenbremsen ist es bekannt, die Rückstellung der Schwenkhebel über eine an der Schwenklagerstelle vorgesehene Spiralfeder sicherzustellen. Die Herstellung, Montage, Wartung und Nachjustierung ist bei diesen bekannten Felgenbremsen jedoch verhältnismäßig umständlich und aufwendig. Darüber hinaus ist die Lagerung der Schwenkhebel verschmutzungsgefährdet. Durch die Anordnung der Spiralfeder ergibt sich weiterhin ein unerwünscht großer Abstand des Schwenkhebels von der Ansatzstelle des ihn tragenden Bremssockels. Weiterhin besitzen diese bekannten Felgenbremsen eine unerwünschte Neigung zu Schwingungen.

Nach einem noch nicht veröffentlichten Vorschlag für eine Fahrrad-Felgenbremse der im Oberbegriff des Anspruches 1 vorausgesetzten Art (deutsche Patentanmeldung P 42 28 320.5) soll eine Felgenbremse weitgehend wartungsfrei ausgebildet sein, kostensparend hergestellt und montiert werden können und weitgehend frei von Vibrationen sein, indem die Schwenkhebel unmittelbar auf Lagerbuchsen gelagert sind, die zwischen dem Bremssockel und dem zugehörigen Schwenkhebel angeordnet sind. Die Federelemente sind als verzahnte Gummifederelemente ausgebildet, die hier weniger hohen Lagerbeanspruchungen ausgesetzt sind, was zu einer weitgehenden Wartungsfreiheit führen soll. Darüber hinaus sind bei diesem älteren Vorschlag die Schwenkhebel in ihrer Ruhelage lediglich in radialer Richtung auf den zugehörigen Lagerbuchsen gelagert. In axialer Richtung besteht dagegen in der Ruhelage ein Spiel zwischen den Anlaufflächen der Schwenkhebel und den komplementären Anlaufflächen der Lagerbuchsen. Erst wenn beim Bremsvorgang eine axiale Kraft auf die Schwenkhebel ausgeübt wird, kommen die Schwenkhebel mit einer Anlauffläche an der komplementären Anlauffläche der zugehörigen Lagerbuchse zur Anlage. Auf diese Weise ergibt sich einerseits bei der Betätigung der Felgenbremse eine erwünschte Leichtgängigkeit, und andererseits werden Schwingungen bzw. Vibrationen beim Bremsvorgang unterdrückt.

Der Erfindung liegt nun die Aufgabe zugrunde, unter Beibehaltung der grundsätzlichen Vorteile dieses älteren Vorschlages eine Fahrrad-Felgenbremse der im Oberbegriff des Anspruches 1 vorausgesetzten Art so weiterzuentwickeln, daß sie in ihrer Konstruktion noch weiter vereinfacht wird.

Diese Aufgabe wird erfindungsgemäß durch die Kombination der im Kennzeichen des Anspruches 1 angegebenen Merkmale gelöst.

Vorteilhafte Ausgestaltungen der Erfindung sind Gegenstand der Unteransprüche.

Im Vergleich zur Felgenbremse nach dem oben beschriebenen älteren Vorschlag sind bei der erfindungsgemäßen Ausführung die beiden gesonderten Lagerteile jedes Schwenkhebels durch einen hülsenförmigen Federträger verdrehsicher miteinander verbunden, der zugleich einen Abstandshalter zwischen diesen beiden Lagerteilen bildet, und jedes Federelement ist erfindungsgemäß als etwa haarnadelförmiger Federkörper ausgebildet, der mit einer Haarnadelöffnung und einer zentralen Innenbohrung versehen und verdrehsicher sowie zentriert innerhalb einer ringförmigen Ausnehmung auf dem Federträger angeordnet ist. Hierbei greift ein im Bereich zwischen innenzylindrischen Lagerflächen am Schwenkhebel vorgesehener innerer Mitnehmernocken in die Haarnadelöffnung des Federkörpers ein. Diese Merkmalskombination führt zu relativ einfach herzustellenden und zusammenzubauenden Einzelelementen für jeden Schwenkhebel, wodurch eine besonders kostensparende Herstellung und eine relativ einfache Montage der ganzen Felgenbremse gewährleistet sind, diese Felgenbremse weitgehend wartungsfrei ist und unerwünschte Schwingungen bzw. Vibrationen beim Bremsvorgang vermeidet.

Die einfache Konstruktion insbesondere der Schwenkhebel wird noch dadurch unterstützt, daß die beiden Lagerteile in Form gleichartiger Lagerringe ausgeführt sind, wobei diese beiden Lagerteile einander gegenüberliegenden Seiten eines buchsenartigen Teiles des zugehörigen Schwenkhebels zugeordnet und spiegelbildlich gegeneinanderweisend auf dem Federträger ausgerichtet sind.

Jeder haarnadelförmige Federkörper kann einstückig aus einem geeigneten Federmaterial hergestellt sein, insbesondere aus Federstahl, elastischem (federndem) Kunststoffmaterial, Carbon-Material oder dgl.

Die Erfindung sei nachfolgend anhand eines in der Zeichnung veranschaulichten Ausführungsbeispieles näher erläutert. In dieser Zeichnung zeigen
Fig.1 eine schematische Stirnansicht der Fahrrad-Felgenbremse;
Fig.2 eine auseinandergezogene, perspektivische Darstellung eines Schwenkhebels und der zu seiner Lagerung bestimmten Teile;
Fig.3 eine Ansicht eines zusammengebauten Schenkhebels (etwa entsprechend der Linie 111-111 in Fig.4;
Fig.4 eine im Halbschnitt dargestellte Aufsicht auf den Schwenkhebel gemäß Fig.3 (bei Halbschnittdarstellung der Schwenklagerstelle).

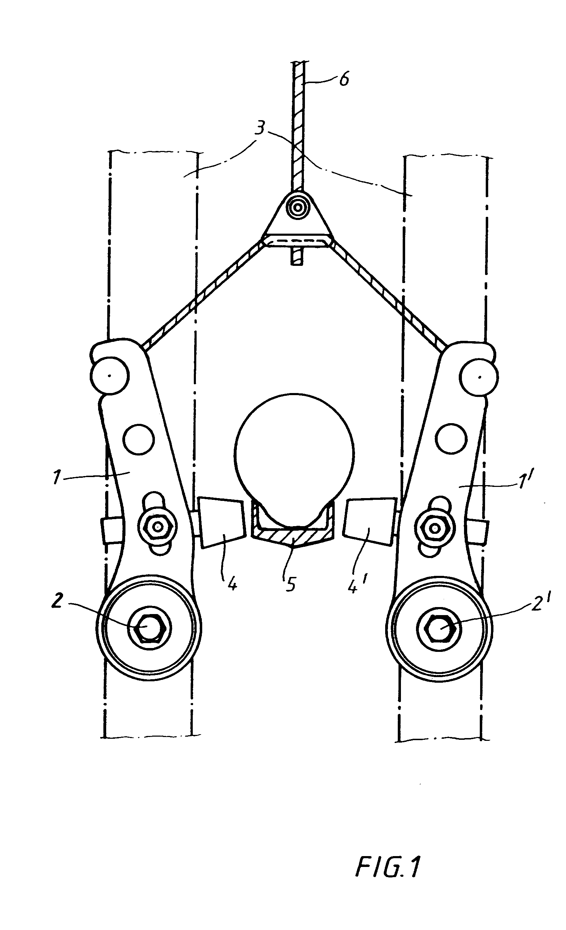

Bei der Darstellung in Fig.1 handelt es sich um eine Fahrrad-Felgenbremse nach Art einer Cantilever-Felgenbremse. Diese Felgenbremse enthält zwei Schwenkhebel 1, 1', die an einer Schwenklagerstelle 2, 2' an der Vorderradgabel 3 eines nicht näher veranschaulichten Fahrrads schwenkbar gelagert sind. Die Schwenkhebel 1, l' tragen Bremsbacken 4, 4', die beim Bremsvorgang an einer Felge 5 des Fahrrads zur Anlage kommen. Zur Betätigung der Schwenkhebel 1, l' dient eine einen Seilzug 6 enthaltende Bremsbetätigungseinrichtung.

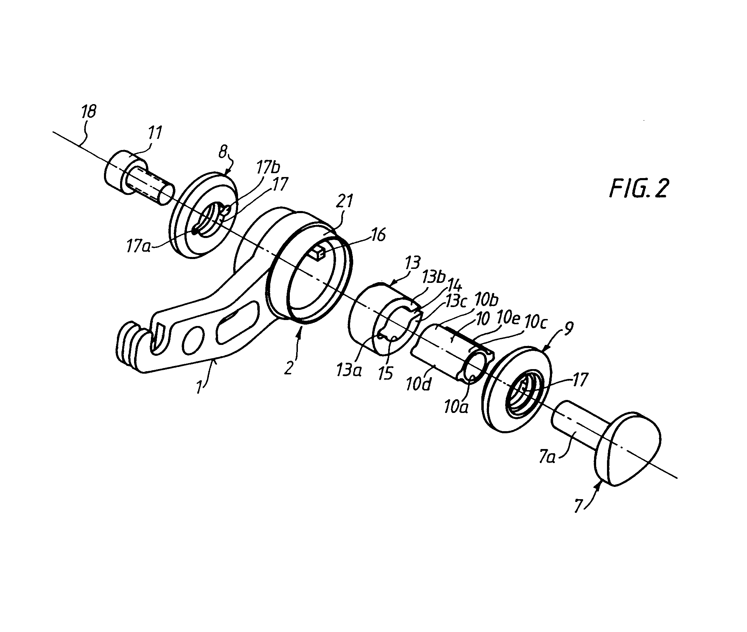

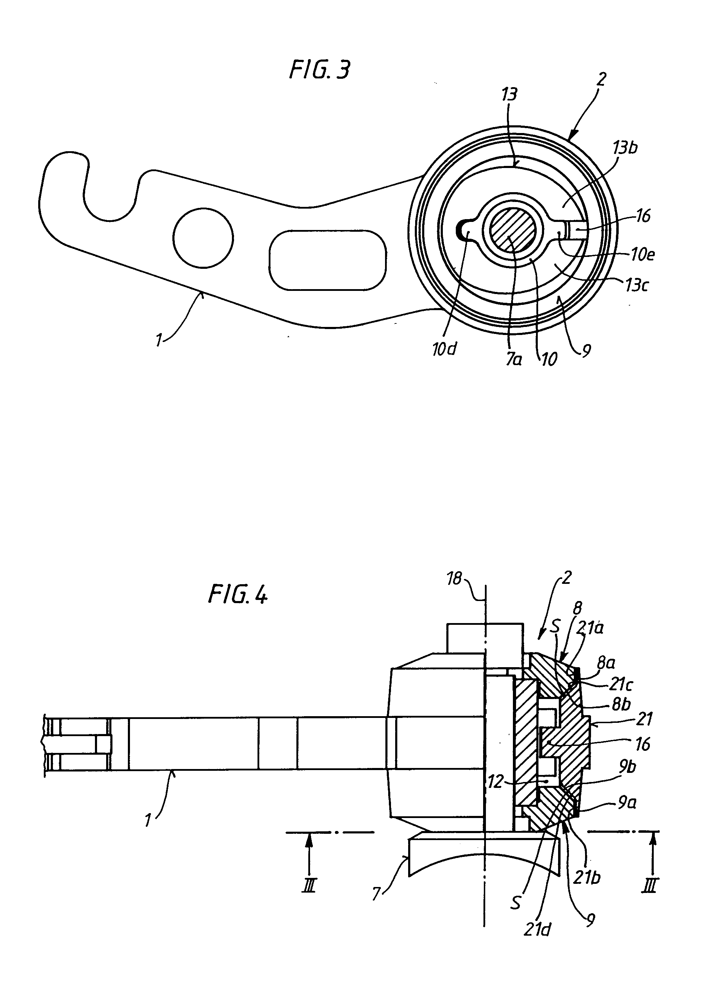

Die wesentlichen Einzelteile des Schwenkhebels 1 und der zugehörigen Schwenklagerstelle 2 sind im auseinandergebauten Zustand in Fig.2 veranschaulicht (der zweite Schwenkhebel 1' mit zugehöriger Schwenklagerstelle 2' ist in entsprechender Weise ausgebildet. Der montierte Zustand der Schwenklagerstelle 2 ist in den Fig.3 und 4 veranschaulicht.

Zur Lagerung jedes Schwenkhebels 1, l' dient je ein zugehöriger Bremssockel 7, der am Fahrrad, d. h. für die Vorderradbremse an der Vorderradgabel 3 und für die Hinterradbremse am Rahmen, befestigt wird.

Zwischen dem Bremssockel 7 und dem Schwenkhebel 1 sind zwei vorzugsweise metallische Lagerteile 8, 9 vorgesehen, die in Form gleichartiger Lagerringe ausgeführt sind. Beide Lagerteile 8, 9 sind dabei axial einander gegenüberliegenden Seiten eines buchsenartigen Teiles 21 des Schwenkhebels 1 zugeordnet und spiegelbildlich gegeneinander auf einem Lagerzapfen 7a des Bremssockels 7 angeordnet und ausgerichtet.

Die beiden Lagerteile 8, 9 jedes Schwenkhebels sind durch einen hülsenförmigen Federträger 10 verdrehsicher miteinander verbunden, der eine zylindrische Innenbohrung 10a von der Größe aufweist, daß er passend auf dem Bremssockel 7 bzw. dessen Lagerzapfen 7a aufgeschoben sein kann. Dieser hülsenförmige Federträger 10 weist eine solche axiale Länge auf, daß er gleichzeitig als Abstandshalter (mit dem erforderlichen Abstandsmaß) zwischen diesen beiden Lagerteilen 8, 9 (bei entsprechender koaxialer Zentrierung zu der Lagerbohrungen) dienen kann. Die beiden Lagerteile 8, 9 und der Federträger 10 sind durch eine in eine Gewindebohrung des Bremssockels 7 bzw. des Bremssockel-Lagerzapfens 7a eingeschraubten Spannschraube 11 fest zusammengespannt.

Zwischen den beiden Lagerteilen 8, 9 ist somit im buchsenartigen Teil 21 eine ringförmige Ausnehmung 12 vorhanden, in der ein Federelement in Form eines etwa haarnadelförmigen Federkörpers 13 angeordnet ist, das der Rückstellung des Schwenkhebels 1 nach jedem Bremsvorgang dient. Dieser Federkörper 13 besitzt (vgl. Fig.2) die Grundform eines etwa hülsenartigen Zylinderkörpers, dessen einer Umfangswandabschnitt unter Ausbildung der Haaruadelöffnung 14 entfernt ist. Der Federkörper 13 weist dabei eine zentrale Innenbohrung 15 auf, deren Weite an den Außenumfang des Federträgers 10 angepaßt ist, auf den der Federkörper 13 verdrehsicher und zentriert aufgeschoben bzw. angeordnet ist. Ein an der Innenseite des buchsenartigen Teiles 21 des Schwenkhebels 1 fest angebrachter bzw. einstückig ausgebildeter innerer Mitnehmernocken 16 greift in die Haarnadelöffnung 14 des Federkörpers vorzugsweise formschlüssig ein.

Die gegeneinanderweisenden Seiten der Lagerteile 8, 9 sind mit gleichartigen Ausdrehungen 17 versehen, die in ihrem Durchmesser und in ihrer Tiefe so groß bemessen sind, daß das jeweils zugehörige axiale Ende 10b bzw. 10c des Federträgers 10 darin passend aufgenommen werden kann. Dabei weist jede Ausdrehung 17 wenigstens eine Zentrierausnehmung, vorzugsweise zwei sich diametral gegenüberliegende Zentrierausnehmungen 17a, 17b auf, in die jeweils eine korrespondierende äußere Zentriernase 10d bzw. 10e an der Außenumfangsseite des Federträgers 10 - für eine passende Aufnahme - eingreift, wenn die Federträgerenden 10b und 10c in die zugehörigen Ausdrehungen 17 der Lagerteile 8, 9 eingesetzt sind. Auf diese Weise wird sowohl die Zentrierung als auch die Verdrehsicherung zwischen den beiden Lagerteilen 8, 9 und dem Federträger 10 sichergestellt.

Bei dem insbesondere in Fig.2 veranschaulichten Ausführungsbeispiel verlaufen die beiden sich - im Querschnitt des Federträgers 10 betrachtet - diametral gegenüberliegenden Zentriernasen 10d und 10e etwa parallel zur geometrischen Mittelachse des Federträgers 10, wobei sie sich über die ganze Länge des Federkörpers 10 erstrecken und etwa rippenartig ausgebildet sind. Jede Zentriernase 10d, 10e greift dabei ferner mit ihrem mittleren Längsabschnitt in eine korrespondierende Zentrierausnehmung 13a bzw. 14 an der Innenbohrung 10a des Federkörpers 10 ein, wobei nur für die erste Zentriernase 10d eine der Haarnadelöffnung 14 diametral gegenüberliegende, gesonderte Zentrierausnehmung 13a an der Innenbohrung 15 des Federkörpers 13 ausgebildet sein muß, während als Zentrieröffnung für die zweite Zentriernase 10e gleichzeitig die ohnehin bereits vorhandene Haarnadelöffnung 14 zu einem Teil dienen kann, in die diese zweite Zentriernase 10e von innen her eingreift.

Der in der zuvor beschriebenen Weise verdrehsicher und zentriert auf dem Federträger 10 angeordnete Federkörper 13 besitzt - wie bereits erwähnt - vorzugsweise die Grundform eines etwa hülsenartigen Zylinderkörpers. Hierbei kann es ferner zweckmäßig sein, die die Haarnadelöffnung 14 begrenzenden Umfangswandabschnitte 13b und 13c so auszubilden, daß sie sich in ihrer Wanddikke zur Haarnadelöffnung 14 hin etwas verjüngen (vgl. Fig.2 und 3).

Jeder Federkörper 13 kann einstückig aus einem geeigneten Federmaterial hergestellt sein, und zwar insbesondere aus Federstahl, elastischem (federndem) Kunststoffmaterial, Carbonmaterial oder dgl.

Es sei schließlich noch auf die Zusammenordnung der beiden Lagerteile 8, 9 mit dem buchsenartigen Teil 21 des Schwenkhebels 1 (und in gleicher Weise auch des Schwenkhebels 1') eingegangen. Danach ist der buchsenartige Teil 21 des Schwenkhebels 1 mit einer innenzylindrischen Lagerfläche 21 a auf einer außenzylindrischen Lagerfläche 8a des Lagerteiles 8 und mit einer zweiten innenzylindrischen Lagerfläche 21 b auf einer außenzylindrischen Lagerfläche 9a des zweiten Lagerteiles 9 gelagert.

Der buchsenartige Teil 21 des Schwenkhebels 1 ist ferner mit an die genannten innenzylindrischen Lagerflächen 21a, 21 b in axialer Richtung anschließenden, kegelstumpfförmigen Anlaufflächen 21c, 21 d versehen, denen komplementäre Anlaufflächen 8b, 9b der Lagerteile 8, 9 gegenüberliegen. In der Ruhelage des Schwenkhebels 1 (die in Fig.4 angenommen ist) besteht dabei ein Spiel S zwischen diesen Anlaufflächen 21 c und 8b einerseits und 21 d und 9b andererseits.

Bei einem Bremsvorgang wirkt nun auf den Bremshebel 1 eine in Richtung der Achse 18 wirkende Mitnahmekraft, die von der Felge 5 über den Bremsbacken 4 auf den Schwenkhebel 1 wirkt und ihn nach der einen oder anderen Seite (bei Betrachtung der Fig.4 nach oben oder unten), d. h. also in Fahrtrichtung nach vorn zu ziehen sucht. Dabei kommt der Schwenkhebel 1 bzw. sein buchsenartiger Teil 21 mit einer seiner beiden Anlaufflächen 21 c bzw. 21 d an der komplementären Anlauffläche 8b bzw. 9b des zugehörigen Lagerteiles 8 bzw. 9 zur Anlage. Durch diese während des Bremsvorganges zwischen dem Schwenkhebel 1 und einem der beiden Lagerteile 8 bzw. 9 vorhandene spielfreie Paarung werden störende Schwingungen und Vibrationen wirksam unterdrückt.

Der Federkörper 13 erfährt bei einem solchen Bremsvorgang und somit bei einer Auslenkung des Schwenkhebels 1 aus seiner Ruhelage eine Biegebeanspruchung und wird dabei elastisch verformt. Beim Lösen der Felgenbremse wird der Schwenkhebel 1 durch die Rückstellkraft des Federkörpers 13 in seine Ruhelage zurückgeführt, wobei gleichzeitig das Spiel S zwischen den beim Bremsvorgang zur gegenseitigen Anlage gekommenen Anlaufflächen 21 c und 8b bzw. 21 d und 9b wiederhergestellt wird. Da dieses Spiel S erst gegen Ende des Anziehens der Felgenbremse aufgehoben und bereits bei Beginn des Lösens der Felgenbremse wiederhergestellt wird, ergibt sich für das Anziehen und Lösen dieser Bremse ein kleiner Reibungswiderstand in der Lagerstelle 2 des Schwenkhebels 1. Die Bremse ist damit äußerst leichtgängig. Andererseits wird während des eigentlichen Bremsvorganges durch die axiale Abstützung des Schwenkhebels an einem der beiden Lagerteile 8 oder 9 (über die genannten Anlaufflächen) eine außerordentlich wirksame Schwingungsunterdrükkung gewährleistet.

## Patentansprüche

1. Fahrrad-Felgenbremse, enthaltend
a) zwei mit Bremsbacken (4) versehene und mit einer Betätigungseinrichtung verbundene Schwenkhebel (1, 1'),
b) zwei zur Lagerung der Schwenkhebel dienende Bremssockel (7),
c) zwei in den Schwenkhebeln angeordnete Federelemente (13) zur Rückstellung der Schwenkhebel nach einem Bremsvorgang,
d) zwischen jedem Bremssockel (7) und dem zugehörigen Schwenkhebel (1, 1') vorgesehene Lagerteile (8, 9), gekennzeichnet durch die Kombination folgender Merkmale:
e) die beiden Lagerteile (8, 9) jedes Schwenkhebels (1, 1') sind durch einen auf dem Bremssockel (7) angeordneten, hülsenförmigen Federträger (10) verdrehsicher miteinander verbunden, der einen Abstandshalter zwischen diesen beiden Lagerteilen bildet;
f) jedes Federelement ist als etwa haarnadelförmiger Federkörper (13) ausgebildet, der mit einer Haarnadelöffnung (14) und einer zentralen Innenbohrung (15) versehen und verdrehsicher sowie zentriert auf dem Federträger (10) angeordnet ist, wobei ein am Schwenkhebel (1) vorgesehener innerer Mitnehmernocken (16) in die Haarnadelöffnung des Federkörpers eingreift.

2. Felgenbremse nach Anspruch 1, dadurch gekennzeichnet, daß die beiden Lagerteile (8, 9) in Form gleichartiger Lagerringe ausgeführt, einander gegenüberliegenden Seiten eines buchsenartigen Teiles (21) des zugehörigen Schwenkhebels (1) zugeordnet und spiegelbildlich gegeneinander ausgerichtet sind,
- wobei der Schwenkhebel in radialer Richtung mittels innenzylindrischer Lagerflächen 21a, 21b) auf außenzylindrischen Lagerflächen (8a, 9a) beider Lagerteile gelagert ist,
- wobei ferner der Schwenkhebel (1) und die beiden Lagerteile (8, 9) mit zueinander komplementären Anlaufflächen (21c, 21 d bzw. 8b, 9b) in der Weise versheen sind, daß in der Ruhelage des Schwenkhebels ein Spiel (S) zwischen den Anlaufflächen des Schwenkhebels und den komplementären Anlaufflächen der beiden Lagerteile besteht, daß jedoch bei Einwirkung einer durch den Bremsvorgang bedingten axialen Kraft auf den Schwenkhebel eine Anlauffläche (21 c bzw. 21d) des Schwenkhebels (1) zur Anlage an der komplementären Anlauffläche (8b bzw. 9b) des einen Lagerteiles (8 bzw. 9) kommt,
- und wobei der innere Mitnehmernocken (16) im Bereich zwischen den innenzylindrischen Lagerflächen (21a, 21b) vorgesehen ist.

3. Felgenbremse nach Anspruch 2, dadurch gekennzeichnet, daß die gegeneinanderweisenden Seiten der Lagerteile (8, 9) mit Ausdrehungen (17) zur Aufnahme eines zugehörigen Endes (10b, 10c) des Federträgers (10) versehen sind, wobei jede Ausdrehung wenigstens eine Zentrierausnehmung (17a, 17b) zur Aufnahme einer korrespondierenden äußeren Zentriernase (10d, 10e) des Federträgers aufweist.

4. Felgenbremse nach Anspruch 3, dadurch gekennzeichnet, daß jeder Federträger (10) an seiner Außenumfangsseite wenigstens eine parallel zu seiner Mittelachse etwa rippenartig verlaufende Zentriernase (10d, 10e) aufweist, die zusammen mit den Enden (10b, 10c) des Federträgers in die Ausdrehungen (17) der Lagerteile (8, 9) und mit ihrem mittleren Längsabschnitt in eine korrespondierende Zentrierausnehmung (13a, 14) an der Innenbohrung (15) des Federkörpers (13) eingreift.

5. Felgenbremse nach Anspruch 4, dadurch gekennzeichnet, daß jeder Federträger (10) an seiner Außenumfangsseite - im Querschnitt betrachtet - zwei sich diametral gegenüberliegende rippenartig verlaufende Zentriernasen (10d, 10e) aufweist, von denen die erste Zentriernase (10d) mit ihrem mittleren Längsabschnitt in die Zentrierausnehmung (13a) an der Innenbohrung (15) und die zweite Zentriernase (10e) mit ihrem mittleren Längsabschnitt von innen her in die Haarnadelöffnung (14) des Federkörpers (13) eingreift.

6. Felgenbremse nach Anspruch 1, dadurch gekennzeichnet, daß jeder Federkörper (13) die Grundform eines etwa hülsenartigen Zylinderkörpers besitzt, dessen einer Umfangswandabschnitt unter Ausbildung der Haarnadelöffnung (14) entfernt ist.

7. Felgenbremse nach Anspruch 6, dadurch gekennzeichnet, daß die die Haarnadelöffnung (14) begrenzenden Umfangswandabschnitte sich in ihrer Wanddicke zur Haarnadelöffnung (14) hin verjüngen.

8. Felgenbremse nach Anspruch 1, dadurch gekennzeichnet, daß jeder Federkörper aus einem geeigneten Federmaterial hergestellt ist, insbesondere aus Federstahl, elastischem Kunststoffmaterial, Carbonmaterial oder dgl.
